# EUROPEAN PATENT APPLICATION

(11) **EP 2 518 619 A1**
(43) Date of publication of application: **31.10.2012**
(21) Application number: 12156858.8
(22) Date of filing: 24.02.2012
(51) Int. Cl.: G06F 9/44

(54) **Electronic apparatus and method for providing firmware thereof**

(30) Priority: 28.04.2011 KR 20110040321
(71) Applicant: Samsung Electronics Co., Ltd., Suwon-si, Gyeonggi-do, 443-742 (KR)
(72) Inventor: Park, Byung-gwon, Gyeonggi-do (KR); Park, Ju-young, Gyeonggi-do (KR); Kim, Sang-wan, Gyeonggi-do (KR); Baek, Ji-seon, Gyeonggi-do (KR); Ju, Young-im, Gyeonggi-do (KR); Na, Jae-sung, Gyeonggi-do (KR)
(74) Representative: Robinson, Ian Michael

(57) **Abstract**

An electronic apparatus and a method for providing firmware thereof are provided. The electronic apparatus includes a plurality of components which perform a function of the electronic apparatus; a common memory unit which stores respective firmware for each of the plurality of components; a system bus which connects the plurality of components with the common memory unit; and a control unit which transmits from the common memory unit, after an apparatus boot, firmware corresponding to each of the plurality of components, wherein the plurality of components each establish respective connections to the system bus by executing a boot code when the electronic apparatus is booted.

## Description

### CROSS-REFERENCE TO RELATED APPLICATIONS

This application claims priority from Korean Patent Application No. 10-2011-0040321, filed in the Korean Intellectual Property Office on April 28, 2011.

### BACKGROUND

### Field

The inventive concept relates to an electronic apparatus which provides firmware to a component performing various functions of the electronic apparatus, and also to a method for providing firmware to an electronic apparatus.

### Description of the Related Art

An electronic apparatus often has several components on a single board, each performing various functions. Inasmuch as the number of components on a single board of such an apparatus may be many, the space that the board takes up necessarily increases as well. Also, since a lot of memory space often has to be included on such a single board of an electronic apparatus, the design of such an electronic apparatus becomes complicated.

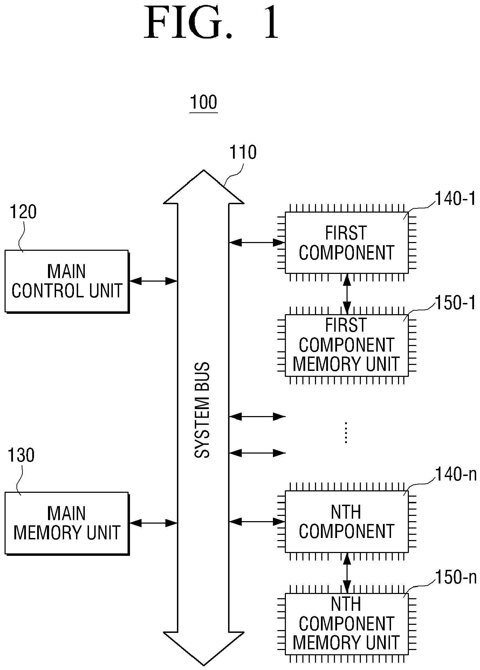

Such an electronic apparatus will be explained with reference to FIG. 1. As illustrated in FIG. 1, an electronic apparatus 100 comprises a system bus 110, a main control unit 120, a main memory unit 130, a plurality of components 140-1, ..., 140-n, and a plurality of component memory units 150-1, ..., 150-n.

In this example, the main memory unit 130 stores a main program executed in the electronic apparatus 100, and the plurality of component memory units 150-1, ... , 150-n store firmware of the plurality of components 140-1, ... , 140-n.

That is, the main control unit 120 and the plurality of components 140-1, ... , 140-n included in the electronic apparatus 100 have access to main memory unit 130 and also to their own plurality of component memory units 150-1, .., 150-n, respectively, and execute a program and firmware stored therein so that the electronic apparatus 100 may operate organically by exchanging data through the system bus 110.

Providing separate component memory units 150-1, ..., 150-n for storing the firmware of the plurality of components 140-1, .., 140-n makes the board complicated, however, necessitating that every individual memory unit be appropriately processed at every production process and whenever software is updated.

### SUMMARY

According to the present invention there is provided an apparatus and method as set forth in the appended claims. Other features of the invention will be apparent from the dependent claims, and the description which follows. One of more exemplary provide an electronic apparatus where, when the electronic apparatus is booted, and where a plurality of components are connected to a system bus using boot code, a control unit provides the corresponding firmware to each of the components from a common memory unit, through the system bus. This aspect also relates to such a method for providing the mentioned firmware.

According to an aspect of an exemplary embodiment, there is provided an electronic apparatus, , including a plurality of components which perform various functions of the apparatus, a common memory unit which stores firmware for the components, a system bus which connects the components with the common memory unit, a control unit which, when the electronic apparatus is booted, transmits the firmware, corresponding to each of the components, to the components themselves, wherein the components are connected to the system bus using a boot code when the electronic apparatus is booted.

The plurality of components, if the electronic apparatus is booted, may initialize the system bus using the boot code and attempt to connect to the system bus.

The boot code may include information for initializing the component and information for initializing the system bus.

The boot code may be code stored in a mask ROM in the component, set when the component is manufactured.

The system bus may be of any number of types, including but not limited to a PCI bus, a USB bus, an IDE bus, a SATA bus, and an IEEE 1394 bus.

Firmware of the plurality of components may be stored in a designated, predetermined area of the common memory unit.

Once connection of the component is confirmed at the system bus, the main control unit may transmit the firmware, of the connected component, from its storage in a designated area of the common memory unit.

Each of the plurality of components may have respective flash memory in which is stored the respective transmitted firmware.

According to an aspect of another exemplary embodiment, there is provided a method for providing firmware of an electronic apparatus, the method including establishing a connection to each of a plurality of components via a system bus when the electronic apparatus is booted; transmitting respective firmware to each of the plurality of components from a common memory unit via a system bus; and executing each received respective firmware at the plurality of components, wherein the common memory unit stores and supports the firmware of each of the plurality of components.

The connecting may include, if the electronic apparatus is booted, initializing the system bus using the boot code and attempting to connect to the system bus at the plurality of components.

The boot code may include information for initializing the component and information for initializing the system bus.

The boot code may be a code which is stored in a mask ROM in the component and is set when the component is manufactured.

The system bus may be of any number of types, including but not limited to a PCI bus, a USB bus, an IDE bus, a SATA bus, and an IEEE 1394 bus.

The firmware of the components may be stored in a designated area of the common memory unit. The receiving of the firmware, once connection of the component over the system bus is confirmed , may include receiving the firmware corresponding to the component from its storage in the designated area of the common memory unit.

The method may further include storing the transmitted firmware in a respective flash memory in each of the plurality of components.

### BRIEF DESCRIPTION OF THE DRAWINGS

The above and/or other aspects will be more apparent by describing certain exemplary embodiments with reference to the accompanying drawings, in which:

FIG. 1 is a block diagram illustrating a related electronic apparatus;

FIG. 2 is a block diagram illustrating an electronic apparatus according to an exemplary embodiment;

FIG. 3 is a view illustrating the provision of firmware of an electronic apparatus according to an exemplary embodiment;

FIG. 4 is a flowchart showing, in simplified form, a method for providing firmware of an electronic apparatus according to an exemplary embodiment; and

FIG. 5 is a flowchart illustrating, in simplified form, a method by which a component receives firmware, according to an exemplary embodiment.

### DETAILED DESCRIPTION

Certain exemplary embodiments are described in greater detail below, with reference to the accompanying drawings.

In the following description, like drawing reference numerals are typically used for the like elements, even in different drawings. The detail set forth in the description, such as detailed construction and elements, are provided to assist the reader in attaining a comprehensive understanding of the inventive concept and the exemplary embodiments. The inventive concept, however, is itself broader than the exemplary embodiments and thus many of the details will be understood to be provided only for the sake of explanation and teaching; many of the specific details set forth below are not to be considered as essential to the practice practiced of the inventive concept. Also, to avoid obscuring the discussion of the inventive concept with unnecessary detail, well-known functions or constructions are not described in detail.

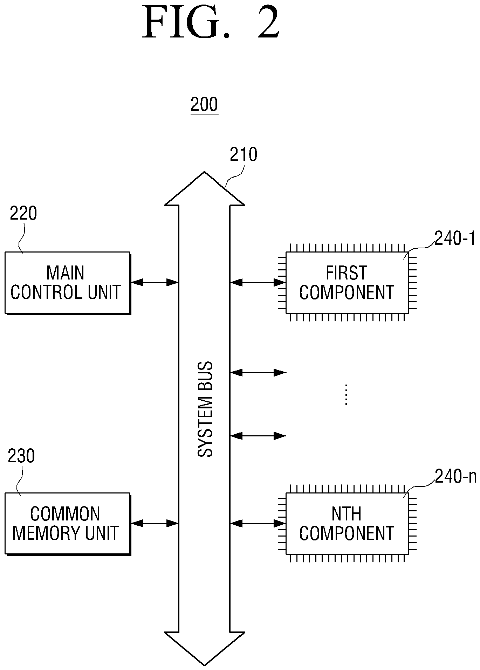

FIG. 2 is a block diagram illustrating an electronic apparatus 200 according to an exemplary embodiment. As illustrated in FIG. 2, the electronic apparatus 200 according to an exemplary embodiment may include a system bus 210, a main control unit 220, a common memory unit 230 and a plurality of components 240-1, ..., 240-n). In this case, the electronic apparatus 200 according to an exemplary embodiment may be thought of as any number of contemporary electronic apparatuses such as a computer, a tablet PC, a smart TV, a smart phone, and the like.

The system bus 210 connects the main control unit 220, the common memory unit 230 and the plurality of components 240-1, ... , 240-n with each other. Here, "connects" may be understood to mean that the system bus provides an electrical pathway over which the main control unit 220, the common memory unit 230, and the plurality of components 240-1 240-n may communicate. Specifically, the system bus 210 connects the common memory unit 230 and the plurality of components 240-1, ..., 240-n) under the control of the control unit 220 serving as a path which transmits firmware of the plurality of components 240-1, ..., 240-n stored in a designated area of the common memory unit 230 to the plurality of corresponding components 240-1, ..., 240-n.

In this case, at least one of a PCI bus, a USB bus, an IDE bus, an AGP bus, a SATA bus, and an IEEE 1394 bus may be used as the system bus 210. For example, if the component 240 is a graphic card, a PCI bus or a SATA bus may be used as the system bus 210, if the component 240 is a Wi-Fi module, a USB bus may be used as the system bus 210, and if the component 240 is a scanner or a printer, an IEEE 1394 bus may be used as the system bus 210.

However, the system bus 210 is not limited to the above-mentioned system buses, and the inventive concept may be applied to various system buses. For example, an Industry Standard Architecture (ISA) bus, a Micro Channel Architecture (MCA) bus, an Extended Industry Standard Architecture (EISA) bus, or an Accelerated Graphics Port (AGP) bus may also be used. Furthermore, the structure that provides a communication pathway between the illustrated parts may be implemented in hardware in any manner, including an actual bus or an interconnect of any type. Multiple levels of buses may be implemented as well, and all of these together may be understood to be within the ambit of a system bus.

The main control unit 220 controls the electronic apparatus 200, and may be understood to include a physical computer processor. Control may be according to a user's command input through a user input unit (not shown). Specifically, the main control unit 220 controls a main program stored in the common memory unit 230 according to a user's command.

In addition, when the electronic apparatus 200 is booted, power is applied to the main control unit 220. When power is applied to the main control unit 220, the main control unit 220 initializes the common memory unit 230 and checks the common memory unit 230. That is, the main control unit 220 establishes a connection with the common memory unit 230 through the system bus 210.

Subsequently, when the component 240 establishes a connection to the system bus 210, e.g., by way of carrying out a boot code program, the main control unit 220 checks the component 240 and controls the common memory unit 230 to transmit firmware corresponding to at least one of the plurality of components 240-1, ..., 240-n. In this case, the firmware represents a program, which is stored in a storage medium, to control hardware.

In addition, the main control unit 220 may control the reset timing of components by transmitting respective firmware to them.

In this case, the main control unit 220 may be embodied as a Central Processing Unit (CPU) or an Application Processor (AP).

The common memory unit 230 stores various programs and data. In particular, the common memory unit 230 may store not only a main program executed by the main control unit 220 but also firmware of the plurality of components 240-1, ..., 240-n. Such firmware may be stored in a designated area. Storing the firmware in a designated area of the common memory unit 230 makes it possible to transmit the firmware fast.

In this case, the common memory unit 230 may be embodied, for example, as a flash memory or a hard disk.

The component 240 performs various functions of the electronic apparatus 200. The component 240 according to an exemplary embodiment, in which the apparatus 200 is a general purpose computer or the like, may be understood to include not only an optical apparatus such as a CD-ROM and DVD-ROM, but also a graphic card, an audio codec, a Wi-Fi module, a scanner, a printer, a keyboard, a mouse, and the like

In particular, the component 240 does not include a separate memory to store firmware outside and instead, receives firmware stored in the common memory unit 240 and operates the received firmware.

Specifically, when the electronic apparatus 200 is booted, power is applied to the component 240. Once power is applied to the component 240, the component 240 establishes a connection to the system bus using the boot code stored in a mask ROM or the like. In this case, the boot code is a code stored in the mask ROM of the component 240 from the time when the component 240 was manufactured and accesses a basic system program. Specifically, the boot code stores initialization information of the component 240 and the system bus 210, and connects to the system bus 210 using the initialization information of the component 240 and the system bus 210.

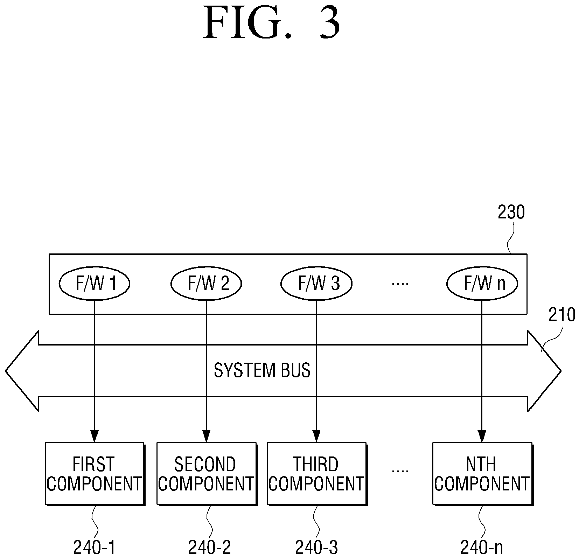

When the component 240 establishes a connection to the system bus 210, the component 240 receives firmware from its designated storage area of the common memory unit 230 under the control of the main control unit 220. The method that the plurality of components 240-1, ..., 240-n receive firmware will be explained with reference to FIG. 3. FIG. 3 is a view to explain a method that a component receives firmware according to an exemplary embodiment.

As illustrated in FIG. 3, firmware of the plurality of components 2401-, .. , 240-n is stored in a designated area of the common memory unit 230. When the first component 240-1 is connected (i.e., establishes a connection) to the system bus 210, the first component 240-1 receives a corresponding first component firmware (F/W 1) from the common memory unit 230, and when the second component 240-2 is connected to the system bus 210, the second component 240-2 receives a corresponding second component firmware (F/W 2) from the common memory unit 230. As such, when the nth component 240-n is connected to the system bus, the nth component 240-n receives a corresponding nth component firmware (F/W n) from the common memory unit 230.

When the component 240 receives firmware, the component 240 executes the received firmware. In addition, the component 240 may include a flash memory in the component and store the received firmware in the flash memory.

As described above, the component 240 does not need to have a separate component memory unit, and operates by receiving firmware previously stored in the common memory unit 230.

In one exemplary embodiment, every firmware program is stored in a storage memory in an integrated form during a manufacturing process. In this exemplary embodiment, there is no need for a separate input apparatus or an input method for storing firmware. In addition, the component 240 may operate immediately when power is applied. Furthermore, the component 240 may store received firmware in its own flash memory.

In addition, as every firmware and programs are stored in one common memory unit 230, there is no need to update firmware individually when updating the firmware, and every firmware may be updated by updating just the common memory unit 230.

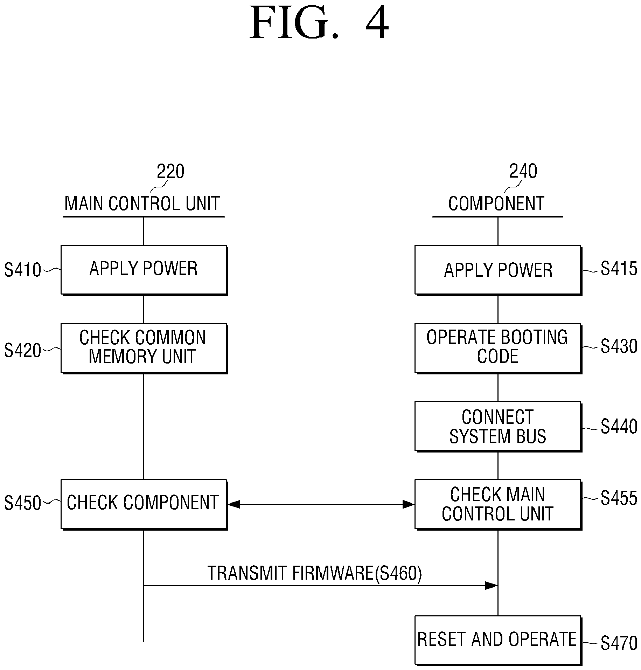

Hereinafter, a method for providing firmware of the electronic apparatus 200 will be explained with reference to FIG. 4.

FIG. 4 is a flowchart to explain a method for providing firmware of an electronic apparatus according to an exemplary embodiment.

When the electronic apparatus 100 is booted, power is applied to the main control unit 220 and the component 240, respectively (S410).

When power is applied to the main control unit 220, the main control unit 220 checks the common memory unit 230, which is connected through the system bus 210 (S420). That is, the main control unit 220 is connected to the system bus 210 and controls the common memory unit 230.

In addition, when power is applied to the component 240, the component 240 operates a booting code (S430) so as to establish a connection to the system bus 210. In this case, the boot code is a code stored in, e.g., the mask ROM of the component 240, from the time when the component 240 was manufactured, and accesses a basic system program. Specifically, the boot code stores initialization information for the component 240 and the system bus 210, and connects to the system bus 210 using the initialization information of the component 240 and the system bus 210.

When the component 240 is connected to the system bus 210 using a boot code, the main control unit 220 checks the component (S450) and the component 240 checks the main control unit 220 (S455). That is, as the main control unit 220 and the component 240 are connected to the system bus 210, they recognize each other.

When the main control unit 220 recognizes the component 240, the main control unit 220 transmits firmware from a designated area of the common memory unit 230 to the corresponding component 240 (S460). For example, when the component 240 is a graphic card, the main control unit 220 may transmit firmware of the graphic card to the graphic card using a PCI bus or an AGP bus. When the component 240 is a Wi-Fi module, the main control unit 220 may transmit firmware of the Wi-Fi module to the Wi-Fi module using a USB bus. As such, the main control unit 220 may transmit firmware of various components to corresponding components using the system bus 210.

When the main control unit 220 transmits corresponding firmware, the component 240 may perform a reset operation and then execute the firmware (S470). In this case, the component 240 may store the transmitted firmware in its own flash memory.

As described above, since the firmware for the component 240 is provided to it, the component 240 does not need to have a separate memory. This not only simplifies the manufacturing process of the board, but also makes the process of updating the firmware easier and faster.

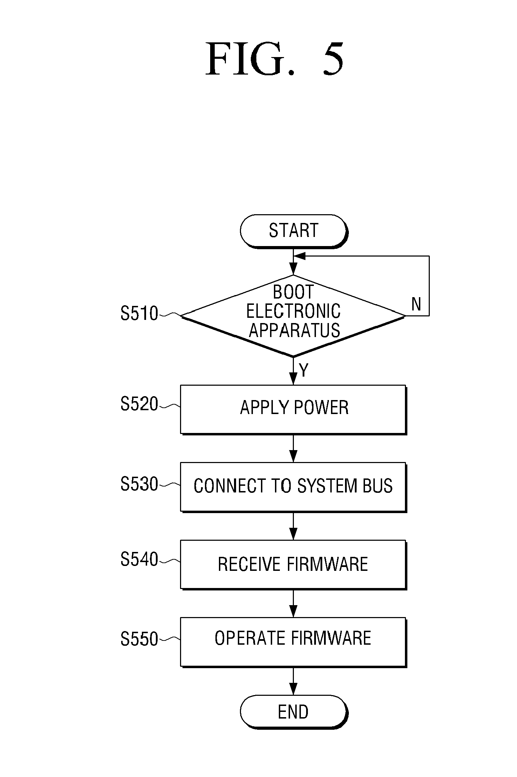

Next, a method by which the component 240 receives firmware will be explained with reference to FIG. 5. FIG. 5 is a flowchart to explain a method that the component 240 receives firmware according to an exemplary embodiment.

First of all, the component 240 determines whether the electronic apparatus 200 is booted (S510). When the electronic apparatus 200 is booted (S510-Y), power is applied to the component 240 (S520).

When power is applied to the component 240, the component 240 is connected to the system bus 210 using a boot code (S530). Specifically, the component 240 initializes the system bus 210 using the initialization information for the component 240 and the system bus 210, and connects to the system bus 210.

When the component 240 is connected to the system bus 210, the component 240 receives firmware, under the control of the main control unit 220 (S540).

When the component 240 receives the firmware, the component 240 executes the received firmware (S550).

As described above, the method for providing firmware according to an exemplary embodiment allows the component 240 to receive firmware from the common memory unit 230 rather than from a separate memory, by being connected to the system bus 210 using a boot code. Accordingly, since the need for a separate memory is alleviated, is it unnecessary to provide space on the board for such components, thereby reducing manufacturing costs. In addition, since the entire software and firmware may be stored in a single common memory, productivity may be improved and maintenance may also be simplified. Furthermore, the complexity of the configuration of an electronic apparatus can be reduced, thereby reducing the complexity of the manufacturing process and also the manufacturing time. In addition, when the a high-speed system bus is used, the time for transmitting a device program may be reduced.

Although a few exemplary embodiments have been shown and described, it would be appreciated by those skilled in the art that changes may be made in to the exemplary embodiments without departing from the principles and spirit of the inventive concept, the scope of which is defined in the claims and their equivalents.

## Claims

1. An electronic apparatus, comprising:
a plurality of components which perform respective functions of the electronic apparatus;
a common memory unit which stores firmware corresponding to the plurality of components;
a system bus which connects the plurality of components with the common memory unit; and
a control unit which, when the electronic apparatus is booted, transmits, to each of the plurality of components, the corresponding firmware from the common memory unit,
wherein the plurality of components are connected to the system bus by executing a boot code when the electronic apparatus is booted.

2. The apparatus as claimed in claim 1, wherein the plurality of components, when the electronic apparatus is booted, initialize the system bus using the boot code and attempt to connect to the system bus.

3. The apparatus as claimed in claim 1 or claim 2, wherein the boot code includes information for initializing the component and information for initializing the system bus.

4. The apparatus as claimed in one of claim 1 to claim 3, wherein the boot code is a code which is stored in a mask ROM in the component and is set when the component is manufactured.

5. The apparatus as claimed in one of claim 1 to claim 4, wherein the system bus includes at least one of a PCI bus, a USB bus, an IDE bus, a SATA bus, and an IEEE 1394 bus.

6. The apparatus as claimed in one of claim 1 to claim 5, wherein the firmware of the plurality of components is stored in a predetermined area of the common memory unit, and
wherein the main control unit, when connection of the component is confirmed at the system bus, transmits the firmware from the predetermined area of the common memory unit.

7. The apparatus as claimed in one of claim 1 to claim 6, wherein the plurality of components store the transmitted firmware in respective flash memory units in the plurality of components.

8. A method for providing firmware of an electronic apparatus, the method comprising:
when the electronic apparatus is booted, establishing a connection for a plurality of components, for performing a function of the electronic apparatus, with a system bus;
receiving, at the plurality of components, firmware corresponding to each of the plurality of components from a common memory unit connected to the system bus; and
executing each of the received firmware at the plurality of components,
wherein the common memory unit stores and supports firmware of each of the plurality of components.

9. The method as claimed in claim 8, wherein the connecting comprises, when the electronic apparatus is booted, initializing the system bus using boot code and attempting to connect to the system bus at the plurality of components.

10. The method as claimed in claim 8 or claim 9, wherein the boot code includes information for initializing the component and information for initializing the system bus.

11. The method as claimed in one of claim 8 to claim 10, wherein the boot code is a code which is stored in a mask ROM in the component and is set when the component is manufactured.

12. The method as claimed in one of claim 8 to claim 11, wherein the system bus includes at least one of a PCI bus, a USB bus, an IDE bus, a SATA bus, and an IEEE 1394 bus.

13. The method as claimed in one of claim 8 to claim 12, wherein the respective firmware of the component is stored in a predetermined area of the common memory unit, and
wherein the receiving comprises, when connection of the component is confirmed at the system bus, receiving at the component the firmware of the component from the predetermined area of the common memory unit.

14. The method as claimed in one of claim 8 to claim 13, further comprising:
storing the transmitted firmware in each flash memory in the plurality of components.
